# EUROPEAN PATENT SPECIFICATION

(11) **EP 1 701 024 B1**
(45) Date of publication and mention of the grant of the patent: **20.01.2010**
(21) Application number: 05250719.1
(22) Date of filing: 08.02.2005
(51) Int. Cl.: F02D 41/00, F02D 41/40, F02D 41/36, F02M 25/07

(54) **Method for operating an internal combustion engine**
Verfahren zum Betrieb einer Brennkraftmaschine
Procédé pour contrôler un moteur à combustion interne

(43) Date of publication of application: 13.09.2006
(73) Proprietor: Delphi Technologies, Inc., Troy, MI 48007 (US)
(72) Inventor: Parmentier, Michael J., 6747 Chatillon (BE)
(74) Representative: Robert, Vincent

(56) References cited:
- EP-A- 0 844 380
- EP-A- 1 205 647
- EP-A- 1 398 483
- EP-A- 1 477 657
- -A- 0 000 000

## Description

The present invention relates to a method of operating an internal combustion engine and in particular to a method of operating a multi-cylinder internal combustion engine during a post-injection operation, the engine having an exhaust gas recirculation system.

The exhaust gas of an internal combustion engine contains various amounts of unburnt hydrocarbons, carbon monoxide (CO) and nitrous oxides (NOx). Emission of these materials to the atmosphere is undesirable. The problem is more acute in urban areas having a high concentration of motor vehicles.

There are several methods for reducing these harmful exhaust emissions. On such method is exhaust gas recirculation (EGR) systems. These systems are typically employed in automotive vehicles in order to help reduce nitrous oxide (NOx) emissions. EGR systems typically employ an EGR passage disposed between the engine exhaust manifold and the air intake manifold and operable to recirculate exhaust gas from the exhaust side of the engine back to the intake side. An EGR valve is typically provided to selectively control the recirculation of exhaust gas.

Unfortunately, components left in the exhaust gas due to incomplete combustion may condense within the exhaust and EGR system and stick to and deposit on surfaces exposed to the exhaust gases. This undesired accumulation can result in reduced engine life and performance and can lead to the failure of components exposed to the exhausts gases, such as the EGR valve.

The closest prior art to the invention is EP0844380, describes post-injection being executed only in a specific cylinder (page 8, line 33 to page 9 line 16) Additionally, the connection port (31) of an EGR pipe (22) is connected to the exhaust manifold of cylinder (4) which is most distant from the specific cylinder. Therefore, when post-injection is executed only in the specific cylinder, the exhaust gas containing hydrocarbon supplied by post injection flows in the most part to the exhaust manifold of the specific cylinder and exhaust gas containing no hydrocarbon supplied by the post injection in the most part flows to the exhaust manifolds of the other cylinders(page 8, lines 44 to 47)..
The feature of the exhaust manifold having a first outlet being located at a first end of the manifold communicating with an exhaust system of the engine and a second outlet being located at a second end of the manifold communicating with the inlet of the exhaust gas recirculation passage, the second outlet being remote from the first outlet, as such is known from EP-A-1 477 657.

However, the combination of EGR and post-injection tends to compound the problem with EGR systems since the injection of additional fuel post-combustion greatly increases the amount of unburnt fuel in the exhaust system and thus may increase the level of deposition within the EGR system and, in particular, on the EGR valve. In order to prevent this, it may be possible to close the EGR valve during a post-injection operation. However, this is not always possible because, particularly in the case of diesel engines, the EGR system is also used to partially control air/fuel ratio, exhaust gas temperature, charge pressure, exhaust gas emissions and other engine operating parameters during a post-injection operation.

According to the present invention there is provided a method for operating an internal combustion engine during a post-injection operation, said engine having a plurality of cylinders, a fuel injection system for injecting fuel into each cylinder, and an exhaust gas recirculation system including an exhaust gas recirculation passage for supplying a portion of the exhaust gases from the engine to the plurality of cylinders, the method comprising the step of supplying additional fuel to at least one of the plurality of cylinders with the exception of the cylinder closest to an inlet of the exhaust gas recirculation passage, wherein the exhaust gases from the cylinders are supplied to the exhaust gas recirculation passage from an exhaust manifold communicating with an exhaust port of each of the plurality of cylinders, the exhaust manifold having a first outlet being located at a first end of the exhaust manifold communicating with an exhaust system of the engine and a second outlet being located at a second end of the exhaust manifold communicating with the inlet of the exhaust gas recirculation passage, the second outlet being remote from said first outlet, whereby interaction of the post-combustion injected fuel and recirculated exhaust gases is prevented.

Preferably additional fuel is supplied to each of the plurality of cylinders with the exception of the cylinder closest to the inlet of the exhaust gas recirculation passage.

Preferably, recirculated exhaust gases are supplied to the plurality of cylinders through an air intake system in communication with the exhaust gas recirculation passage.

According to a second aspect of the present invention there is provided an internal combustion engine having a plurality of cylinders, a fuel injection system for injecting fuel into each of said plurality of cylinders, and an exhaust gas recirculation system including an exhaust gas recirculation passage for supplying a portion of the exhaust gases from the engine to the plurality of cylinders, the fuel injection system having means for providing additional fuel during a post injection operation to at least one of the cylinders with the exception of the cylinder closest to an inlet of the exhaust gas recirculation passage, wherein the engine further comprises an exhaust manifold communicating with an exhaust port of each cylinder, the exhaust manifold having a first outlet being located at a first end communicating with an exhaust system of the engine and a second outlet being located at a second end of the exhaust manifold communicating with the inlet of the exhaust gas recirculation passage, remote from said first outlet, whereby interaction of the post-combustion injected fuel and recirculated exhaust gases is prevented.

Preferably additional fuel is supplied to each of the plurality of cylinders with the exception of the cylinder closest to the inlet of the exhaust gas recirculation passage.

Preferably the first and second outlets of the exhaust manifold are arranged such that gas exits the second outlet in a different direction from gas exiting the first outlet. The arrangement of the first and second outlet may be such that exhaust gases exit the second outlet in a direction opposite to the direction of gas exiting the first outlet.

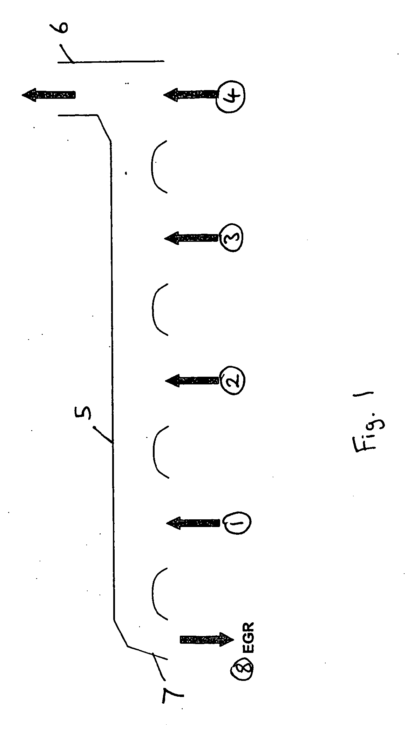

An embodiment of the present invention will now be described, by way of example only, with reference to the drawing, in which:-
Figure 1 is a schematic view of an internal combustion engine according to an embodiment of the present invention.

Fig.1 shows an exhaust manifold 5 of a diesel fuelled internal combustion engine having four cylinders 1,2,3,4, each having an exhaust port communicating with the exhaust manifold.

The exhaust manifold 5 has an exhaust gas outlet port 6, communicating with the exhaust system, and an EGR port 7, communicating with an EGR passage 8 whereby exhaust gases can be recirculated into the cylinders via the air intake system of the engine. An EGR valve (not shown) controls the flow of exhaust gases through the EGR passage.

A fuel injection system injects fuel directly into each cylinder of the engine under the control of an engine management system.

During a post-injection operation, additional fuel is injected into the cylinders of the engine after main combustion. As discussed above, such post-injection operations are often required for particulate filter regeneration, NOx trap regeneration and/or desulfation.

The engine management system controls the fuel injection system during a post-injection operation to supply additional fuel to the three cylinders 2,3,4 closest to the exhaust port 6, whilst supplying no additional fuel to the cylinder 1 closest to the EGR port 7 and the EGR passage 8 such that no post-injection of fuel into that cylinder 1 takes place. As such, a rich air/fuel mixture is supplied to the exhaust system via the exhaust gas outlet port 6 whilst a lean air/fuel mixture is supplied to the EGR passage 8 via the EGR port 7, whereby any deposition of unburnt fuel in the EGR passage 8 is minimised.

## Claims

1. A method for operating an internal combustion engine during a post-injection operation, said engine having a plurality of cylinders, a fuel injection system for injecting fuel into each cylinder, and an exhaust gas recirculation system including an exhaust gas recirculation passage for supplying a portion of the exhaust gases from the engine to the plurality of cylinders, the method comprising the step of supplying additional fuel to at least one of the plurality of cylinders with the exception of the cylinder closest to an inlet of the exhaust gas recirculation passage, wherein the exhaust gases from the cylinders are supplied to the exhaust gas recirculation passage from an exhaust manifold communicating with an exhaust port of each of the plurality of cylinders, the exhaust manifold having a first outlet being located at a first end of the exhaust manifold communicating with an exhaust system of the engine and a second outlet being located at a second end of the exhaust manifold communicating with the inlet of the exhaust gas recirculation passage, the second outlet being remote from said first outlet, whereby interaction of the post-combustion injected fuel and recirculated exhaust gases is prevented.

2. A method as claimed in claim 1, wherein additional fuel is supplied to each of the plurality of cylinders with the exception of the cylinder closest to the inlet of the exhaust gas recirculation passage.

3. A method as claimed in claim 1 or 2, wherein recirculated exhaust gases are supplied to the plurality of cylinders through an air intake system in communication with the exhaust gas recirculation passage.

4. An internal combustion engine having a plurality of cylinders, a fuel injection system for injecting fuel into each of said plurality of cylinders, and an exhaust gas recirculation system including an exhaust gas recirculation passage for supplying a portion of the exhaust gases from the engine to the plurality of cylinders, the fuel injection system having control means for providing additional fuel during a post injection operation to at least one of the cylinders with the exception of the cylinder closest to an inlet of the exhaust gas recirculation passage, wherein the engine further comprises an exhaust manifold communicating with an exhaust port of each cylinder, the exhaust manifold having a first outlet being located at a first end communicating with an exhaust system of the engine and a second outlet being located at a second end of the exhaust manifold communicating with the inlet of the exhaust gas recirculation passage, the second outlet being remote from said first outlet, whereby interaction of the post-combustion injected fuel and recirculated exhaust gases is prevented.

5. An internal combustion engine as claimed in claim 4, wherein additional fuel is supplied to each of the plurality of cylinders with the exception of the cylinder closest to the inlet of the exhaust gas recirculation passage.

6. An internal combustion engine as claimed in claim 4 or 5, wherein the first and second outlets of the exhaust manifold are arranged such that gas exits the second outlet in a different direction from gas exiting the first outlet.

7. An internal combustion engine as claimed in claim 6, wherein the arrangement of the first and second outlet is such that exhaust gases exit the second outlet in a direction opposite to the direction of gas exiting the first outlet.

## Patentansprüche

1. Verfahren zum Betrieb eines Verbrennungsmotors während eines Nacheinspritzungsbetriebs, wobei der Motor eine Vielzahl von Zylindern hat, ein Kraftstoffeinspritzsystem zum Einspritzen von Kraftstoff in jeden Zylinder, und ein Abgasrezirkulationssystem mit einem Abgasrezirkulationsdurchlass zum Liefern eines Teils des Abgases von dem Motor an die Vielzahl von Zylindern, wobei das Verfahren aufweist den Schritt eines Lieferns von zusätzlichem Kraftstoff an zumindest einen der Vielzahl von Zylindern mit der Ausnahme des Zylinders, der am nächsten zu einem Einlass des Abgasrezirkulationsdurchlasses ist, wobei die Abgase von den Zylindern an den Abgasrezirkulationsdurchlass geliefert werden von einem Abgassammler in Verbindung mit einer Abgasöffnung von jedem der Vielzahl von Zylindern, wobei der Abgassammler einen ersten Auslass hat, der sich an einem ersten Ende des Abgassammlers befindet in Verbindung mit einem Abgassystem des Motors, und einen zweiten Auslass, der sich an einem zweiten Ende des Abgassammlers befindet in Verbindung mit dem Einlass des Abgasrezirkulationsdurchlasses, wobei der zweite Auslass entfernt von dem ersten Auslass ist, wodurch eine Interaktion des nach Verbrennung eingespritzten Kraftstoffs und der rezirkulierten Abgasen verhindert wird.

2. Verfahren gemäß Anspruch 1, wobei zusätzlicher Kraftstoff an jeden der Vielzahl von Zylindern geliefert wird mit Ausnahme des Zylinders am nächsten zu dem Einlass des Abgasrezirkulationsdurchlasses.

3. Verfahren gemäß Anspruch 1 oder 2, wobei rezirkulierte Abgase an die Vielzahl von Zylinder durch ein Lufteinlasssystem in Verbindung mit dem Abgasrezirkulationsdurchlass geliefert werden.

4. Verbrennungsmotor mit einer Vielzahl von Zylindern, einem Kraftstoffeinspritzsystem zum Einspritzen von Kraftstoff in jeden der Vielzahl von Zylindern, und einem Abgasrezirkulationssystem mit einem Abgasrezirkulationsdurchlass zum Liefern eines Teils des Abgases von dem Motor an die Vielzahl von Zylindern, wobei das Kraftstoffeinspritzsystem Steuerungsmittel hat zum Liefern von zusätzlichem Kraftstoff während eines Nacheinspritzbetriebs an zumindest einen der Zylinder mit Ausnahme des Zylinders am nächsten zu einem Einlass des Abgasrezirkulationsdurchlasses, wobei der Motor weiter aufweist einen Abgassammler in Verbindung mit einer Abgasöffnung von jedem der Zylinder, wobei der Abgassammler einen ersten Auslass hat, der sich an einem ersten Ende des Abgassammlers befindet in Verbindung mit einem Abgassystem des Motors, und einen zweiten Auslass, der sich an einem zweiten Ende des Abgassammlers befindet in Verbindung mit dem Einlass des Abgasrezirkulationsdurchlasses, wobei der zweite Auslass entfernt von dem ersten Auslass ist, wodurch eine Interaktion des nach Verbrennung eingespritzten Kraftstoffs und der rezirkulierten Abgasen verhindert wird.

5. Verbrennungsmotor gemäß Anspruch 4, wobei zusätzlicher Kraftstoff an jeden der Vielzahl von Zylindern geliefert wird mit Ausnahme des Zylinders am nächsten zu dem Einlass des Abgasrezirkulationsdurchlasses.

6. Verbrennungsmotor gemäß Anspruch 4 oder 5, wobei die ersten und zweiten Auslässe des Abgassammlers derart angeordnet sind, dass Gas den zweiten Auslass in eine andere Richtung verlässt als Gas, das den ersten Auslass verlässt.

7. Verbrennungsmotor gemäß Anspruch 6, wobei die Anordnung des ersten und zweiten Auslasses derart ist, dass Abgase den zweiten Auslass in eine entgegengesetzte Richtung zu der Richtung des Gases verlassen, das den ersten Auslass verlässt.

## Revendications

1. Procédé pour le fonctionnement d'un moteur à combustion interne pendant une opération post-injection, ledit moteur ayant une pluralité de cylindres, un système d'injection de carburant pour injecter du carburant dans chaque cylindre, et un système de recyclage de gaz d'échappement incluant un passage de recyclage de gaz d'échappement pour fournir une portion des gaz d'échappement provenant du moteur vers la pluralité de cylindres, le procédé comprenant l'étape consistant à fournir un carburant additionnel à l'un au moins de la pluralité de cylindres à l'exception du cylindre le plus proche d'une entrée du passage de recyclage de gaz d'échappement, dans lequel les gaz d'échappement provenant des cylindres sont fournis au passage de recyclage de gaz d'échappement depuis un collecteur d'échappement qui communique avec un orifice d'échappement de chacun de la pluralité de cylindres, le collecteur d'échappement ayant une première sortie située à une première extrémité du collecteur d'échappement en communication avec un système d'échappement du moteur et une seconde sortie située à une seconde extrémité du collecteur d'échappement en communication avec l'entrée du passage de recyclage de gaz d'échappement, la seconde sortie étant éloignée de ladite première sortie, grâce à quoi on empêche une interaction du carburant injecté en post-combustion et les gaz d'échappement recyclés.

2. Procédé selon la revendication 1, dans lequel du carburant additionnel est fourni à chacun de la pluralité de cylindres à l'exception du cylindre le plus proche de l'entrée du passage de recyclage de gaz d'échappement.

3. Procédé selon la revendication 1 ou 2, dans lequel les gaz d'échappement recyclés sont fournis à la pluralité de cylindres via un système d'admission d'air en communication avec le passage de recyclage de gaz d'échappement.

4. Moteur à combustion interne ayant une pluralité de cylindres, un système d'injection de carburant pour injecter du carburant dans chacun de ladite pluralité de cylindres, et un système de recyclage de gaz d'échappement incluant un passage de recyclage de gaz d'échappement pour fournir une portion des gaz d'échappement provenant du moteur vers la pluralité de cylindres, le système d'injection de carburant possédant des moyens de commande pour fournir du carburant additionnel pendant une opération post-injection vers l'un au moins des cylindres à l'exception du cylindre le plus proche d'une entrée du passage de recyclage de gaz d'échappement, dans lequel le moteur comprend en outre un collecteur d'échappement en communication avec un orifice d'échappement de chaque cylindre, le collecteur d'échappement ayant une première sortie située à une première extrémité en communication avec un système d'échappement du moteur, et une seconde sortie située à une seconde extrémité du collecteur d'échappement en communication avec l'entrée du passage de recyclage de gaz d'échappement, la seconde sortie étant éloignée de ladite première sortie, grâce à quoi une interaction du carburant injecté post-combustion et des gaz d'échappement est empêchée.

5. Moteur à combustion interne selon la revendication 4, dans lequel du carburant additionnel est fourni à chacun de la pluralité de cylindres à l'exception du cylindre le plus proche de l'entrée du passage de recyclage de gaz d'échappement.

6. Moteur à combustion interne selon la revendication 4 ou 5, dans lequel la première et la seconde sortie du collecteur d'échappement sont agencées de telle façon que les gaz sortent de la seconde sortie dans une direction différente des gaz sortant de la première sortie.

7. Moteur à combustion interne selon la revendication 6, dans lequel l'agencement de la première et de la seconde sortie est tel que les gaz d'échappement sortent de la seconde sortie dans une direction opposée à la direction des gaz sortant de la première sortie.
